# EUROPEAN PATENT APPLICATION

(11) **EP 4 668 466 A1**
(43) Date of publication of application: **24.12.2025**
(21) Application number: 25170100.9
(22) Date of filing: 11.04.2025
(51) Int. Cl.: H01M 50/534, H01M 50/595, H01M 50/536

(54) **SECONDARY BATTERY ELECTRODE WHERE TAPE IS ATTACHED AND ELECTRODE ASSEMBLY INCLUDING THE SAME**

(30) Priority: 17.06.2024 KR 20240078567
(71) Applicant: SAMSUNG SDI CO., LTD., Yongin-si, Gyeonggi-do 17084 (KR)
(72) Inventor: PARK, Seung-Young, 17084 Yongin-Si Gyeonggi-do (KR); KIM, Gwijae, 17084 Yongin-Si Gyeonggi-do (KR); DOO, Jaegyun, 17084 Yongin-Si Gyeonggi-do (KR)
(74) Representative: Gulde & Partner

(57) **Abstract**

The secondary battery electrode includes a substrate including an uncoated portion including a first surface and a second surface, the second surface being opposite the first surface, and a coated portion on which a first active material layer and a second active material layer are coated, the second active material layer being on a surface of the substrate opposite the first active material layer. The secondary battery also includes an electrode tab coupled to the substrate, a first tape adhered to a portion of the first active material layer around the electrode tab and the uncoated portion, and a second tape opposite the first tape and adhered to a portion of the second active material layer around the uncoated portion. Further, a tensile strength of at least one of the first tape or the second tape is 230 N/mm² or greater.

## Description

### BACKGROUND

### 1. Field

Embodiments of the present disclosure relate to a secondary battery electrode and an electrode assembly. For example, embodiments of the present disclosure relate to a secondary battery electrode including a tape attached to opposite surfaces of an uncoated portion, and an electrode assembly including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The secondary battery may be composed of the electrode assembly, in which a positive electrode plate, a negative electrode plate, and a separator are sequentially stacked, and a battery can that houses the electrode assembly along with an electrolyte, such as a nonaqueous or a solid electrolyte.

In such secondary batteries, the electrode assembly may be configured in different forms depending on the structure of the secondary battery. The electrode assembly may be a jelly roll-type (kind) assembly in which long sheet-shaped positive and negative electrode plates are wound together with a separator interposed therebetween. Alternatively, the electrode assembly may be a stacked assembly in which multiple positive and negative electrode plates are sequentially stacked with separators interposed between them.

The positive and negative electrode plates that form the electrode assembly are connected to electrode tabs, which serve as terminals for electrical connection. These electrode plates may have uncoated portions on which no active material is applied. The electrode tabs may be welded to these uncoated portions. During the charging and discharging cycles of the secondary battery, a phenomenon known as swelling may occur, where the electrodes expand. In a formation process, which is part of the manufacturing process of the secondary battery, the battery is activated by repeated charging and discharging, and, during this activation, the active material may expand, leading to swelling. The expansion ratio can vary depending on the type (kind) of active material.

In a secondary battery in which the electrode assembly is configured as either a winding (jelly roll) type (kind) assembly or a stacked-type (kind) assembly, pressure and stress due to step differences, tab thickness, and rigidity, that occur at the electrode tab attachment areas of the electrode plate may concentrate stress on such areas, leading to the formation of cracks. While the intrinsic physical properties of the substrate may be sufficient to prevent or reduce such issues when using an active material with a low expansion ratio, in a high-capacity secondary batteries where an active material with a higher expansion ratio is used, the intrinsic physical properties of the substrate may not be enough to prevent or reduce stress concentration in the stress-concentrated areas, resulting in the formation of cracks. Cracks that occur around the electrode tabs can lead to severe issues such as a decrease in the reliability (e.g., capacity and lifespan), short circuits, electrical faults, or even ignition of the secondary battery cell.

The above information disclosed in this Background section is for enhancement of understanding of the background of the present disclosure, and therefore, it may contain information that does not constitute related (or prior) art.

### SUMMARY

In view of the above, aspects of one or more embodiments of the present disclosure are directed to a secondary battery electrode to which a tape is attached and an electrode assembly including the secondary battery electrode.

These and other aspects and features of the present disclosure will be described in or will be apparent from the following description of embodiments of the present disclosure.

One or more embodiments of the present disclosure provide a secondary battery electrode including: a substrate including an uncoated portion including a first surface and a second surface, the second surface being opposite the first surface, and a coated portion on which a first active material layer and a second active material layer are coated, the second active material layer being on a surface of the substrate opposite the first active material layer; an electrode tab coupled to the substrate; a first tape adhered to a portion of the first active material layer around the electrode tab and the uncoated portion; and a second tape arranged opposite the first tape and adhered to a portion of the second active material layer around the uncoated portion. Further, a tensile strength of at least one of the first tape or the second tape is 230 N/mm² or greater.

According to one or more embodiments of the present disclosure, the tensile strength of at least one of the first tape or the second tape may be 230 N/mm² or greater and 375 N/mm² or less.

According to one or more embodiments of the present disclosure, the tensile strength of the second tape may be equal to or greater than the tensile strength of the first tape.

According to one or more embodiments of the present disclosure, a ratio of the tensile strength of the first tape to the tensile strength of the second tape may be in a range of 1:1 to 1:1.5.

According to one or more embodiments of the present disclosure, the tensile strength of the second tape may be 280 N/mm².

According to one or more embodiments of the present disclosure, in a case where an internal expansion ratio of the secondary battery electrode is 0.2 or less, each of the tensile strength of the first tape and the tensile strength of the second tape may be 230 N/mm² or greater and 280 N/mm² or less. Here, the internal expansion ratio may indicate a ratio of difference between a thickness of the secondary battery electrode after a formation process and a thickness of the secondary battery electrode before the formation process relative to the thickness of the secondary battery electrode before the formation process.

According to one or more embodiments of the present disclosure, in a case where the internal expansion ratio of the secondary battery electrode is greater than 0.2 but not exceeding 0.3, the tensile strength of at least one of the first tape or the second tape may be 280 N/mm² or greater.

According to one or more embodiments of the present disclosure, in a case where the internal expansion ratio of the secondary battery electrode is greater than 0.3 but less than 0.45, the tensile strength of the first tape and the tensile strength of the second tape may each be 280 N/mm² or greater.

According to one or more embodiments of the present disclosure, in a case where the internal expansion ratio of the secondary battery electrode is 0.45 or greater, the tensile strength of the first tape and the tensile strength of the second tape may each be 375 N/mm².

According to one or more embodiments of the present disclosure, the electrode tab may be arranged on the first surface of the uncoated portion.

According to one or more embodiments of the present disclosure, the first surface and the second surface of the uncoated portion may have the same width.

According to one or more embodiments of the present disclosure, the first active material layer may include a first-1 active material layer and a first-2 active material layer, the second active material layer may include a second-1 active material layer and a second-2 active material layer, the first surface of the uncoated portion may be arranged between the first-1 active material layer and the first-2 active material layer, and the second surface of the uncoated portion may be arranged between the second-1 active material layer and the second-2 active material layer.

According to one or more embodiments of the present disclosure, the first tape may be adhered to a portion of the first surface of the uncoated portion, and the second tape may be adhered to a portion of the second surface of the uncoated portion.

According to one or more embodiments of the present disclosure, each of the first tape and the second tape may include a base film and an adhesive layer.

According to one or more embodiments of the present disclosure, the tensile strength of the first tape may be determined by at least one of a tensile strength or a physical property of the base film of the first tape; and the tensile strength of the second tape may be determined by at least one of a tensile strength or a physical property of the base film of the second tape.

One or more embodiments of the present disclosure provide an electrode assembly including: a negative electrode plate having a negative electrode tab; a positive electrode plate having a positive electrode tab; and a separator arranged between the negative electrode plate and the positive electrode plate. The negative electrode plate includes: a substrate including an uncoated portion including a first surface and a second surface, the second surface being opposite the first surface, and a coated portion on which a first active material layer and a second active material layer are coated, the second active material layer being on a surface of the substrate opposite the first active material layer; the negative electrode tab coupled to the substrate; a first tape adhered to a portion of the first active material layer around the negative electrode tab and the uncoated portion; and a second tape arranged opposite the first tape and adhered to a portion of the second active material layer around the uncoated portion. Further, a tensile strength of at least one of the first tape or the second tape is 230 N/mm² or greater.

According to one or more embodiments of the present disclosure, the electrode assembly may include a jelly roll configuration in which the negative electrode plate, the separator, and the positive electrode plate are wound.

According to one or more embodiments of the present disclosure, the electrode assembly may be wound with the second surface of the substrate as an outer surface.

According to one or more embodiments of the present disclosure, the tensile strength of the second tape may be equal to or greater than the tensile strength of the first tape.

According to one or more embodiments of the present disclosure, a ratio of the tensile strength of the first tape to the tensile strength of the second tape may be in a range of 1:1 to 1:1.5.

According to one or more embodiments of the present disclosure, cracks that may occur in the secondary battery electrode plate can be prevented or reduced.

According to one or more suitable embodiments of the present disclosure, the tape attached to the electrode plate can complement the physical properties of the substrate, thereby preventing or reducing the formation of cracks in the electrode plate caused by stress concentration, even if (*e.g.*, when) using active materials with high expansion ratios.

According to one or more suitable embodiments of the present disclosure, the formation of cracks in the electrode plate can be prevented or reduced by selectively attaching tapes made from different materials or different manufacturing methods based on the expansion ratio. This approach enables the production of the secondary battery at a lower cost by attaching a tape with the most appropriate or suitable tensile strength value.

According to one or more suitable embodiments of the present disclosure, in a case where the first tape and the second tape are formed such that the tensile strength of the second tape is greater than the tensile strength of the first tape, the formation of cracks due to step differences can be more effectively prevented or reduced.

Modifying the composition of the substrate to enhance the strength of the substrate may affect other characteristics of the secondary battery electrode. However, adjusting the tensile strength of the first tape and the tensile strength of the second tape allows the physical properties of the substrate to be compensated for without impacting other characteristics of the secondary battery electrode.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a plan view of a secondary battery electrode according to one or more embodiments of the present disclosure.
FIG. 2 illustrates a cross-sectional view taken along the line A-A' of FIG. 1, according to one or more embodiments of the present disclosure.
FIG. 3 illustrates a cross-sectional view taken along the line A-A' of FIG. 1 according to one or more embodiments of the present disclosure.
FIG. 4 illustrates an exploded perspective view of a tape according to one or more embodiments of the present disclosure.
FIG. 5 illustrates an exploded perspective sectional view of an electrode assembly according to one or more embodiments of the present disclosure.
FIG. 6 illustrates a cross-sectional diagram of a portion of an electrode assembly to explain the cause of crack formation.
FIG. 7 illustrates a cross-sectional diagram of a portion of an electrode assembly to explain the cause of crack formation.
FIG. 8 is a bar graph showing test results for the tensile strength of a substrate manufactured using different manufacturing methods, according to one or more embodiments of the present disclosure.
FIG. 9 is a graph showing results of a tensile test conducted with and without to attachment of a tape.
FIG. 10 is a graph showing tensile strength values based on different types (kinds) of tapes and their attachment locations, according to one or more embodiments of the present disclosure.
FIG. 11 is a table showing a crack occurrence ratio (%) based on an internal expansion ratio (%) and a tensile strength of a tape attached to an electrode plate.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In addition, it will also be understood that when an element is referred to as being "between" two elements, it can be the only element between the two elements, or one or more intervening elements may also be present.

In the present disclosure, an "electrode assembly" may be formed or manufactured by stacking or winding a stack of a thin plate-like or film-like components such as positive electrodes, separators, and negative electrodes. In such embodiments, the positive electrode may be formed by coating a positive current collector made of a metal layer or a metal foil, such as aluminum, with a positive active material, such as graphite or carbon. Similarly, the negative electrode may be formed by coating a negative current collector made of a metal layer or a metal foil, such as copper or nickel, with a negative active material, such as a transition metal oxide. Here, the metal foil or the metal layer may be arranged on a polymer substrate.

In the present disclosure, the term "separator" refers to an intermediate film within the battery that isolates the positive electrode from the negative electrode while maintaining ionic conductivity, thereby enabling the charging and discharging of the battery. The separator may be composed of materials such as polyethylene, polypropylene, polyvinylidene fluoride, or a multilayer film including (*e.g.*, consisting of) two or more of these materials, but the present disclosure is not limited thereto.

In the present disclosure, the term "formation process" refers to a process of activating the battery by repeatedly charging and discharging the battery after assembly. During this process, the active materials within the battery may expand, potentially causing the phenomenon of swelling.

In the present disclosure, the term "internal expansion ratio" refers to the ratio of the thickness difference of the secondary battery electrode before and after the formation process. It represents the proportion of the difference between the thickness of the secondary battery electrode after the formation process and the thickness of the secondary battery electrode before the formation process, relative to the thickness of the electrode before the formation process (*i.e.,* (thickness of the secondary battery electrode after the formation process - thickness of the secondary battery electrode before the formation process)/(thickness of the secondary battery electrode before the formation process)).

In the present disclosure, the sizes and relative dimensions of the layers and regions shown in the drawings may be exaggerated for the sake of clarity of explanation. The sizes depicted in the drawings are intended for ease of understanding and are not intended to limit the scope of the present disclosure. Additionally, throughout the specification, like reference numerals will be given to refer to like parts, unless otherwise provided.

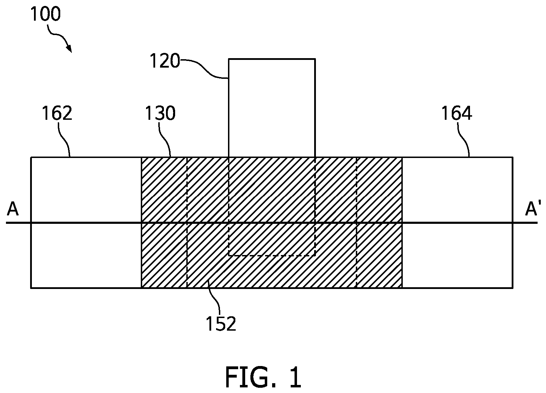

FIG. 1 illustrates a top (plan) view of a secondary battery electrode 100 according to one or more embodiments of the present disclosure.

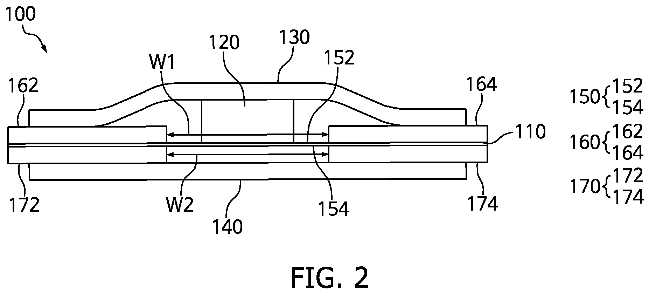

FIG. 2 illustrates a cross-sectional view taken along the line A-A' of FIG. 1, according to one or more embodiments of the present disclosure.

As shown in FIGS. 1 and 2, the secondary battery electrode 100 according to one or more embodiments of the present disclosure includes a substrate 110, an electrode tab 120, a first tape 130, a second tape 140, an uncoated portion 150, a first active material layer 160, and a second active material layer 170.

In one or more embodiments, the substrate 110 may serve to provide structural support for the secondary battery electrode 100. The substrate 110 may include, but is not limited to, copper (Cu) and/or aluminum (Al).

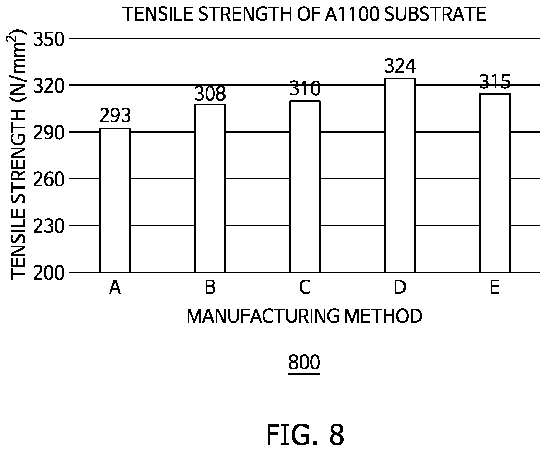

In one or more embodiments, the substrate 110 may be manufactured using one or more suitable methods. Even if (*e.g.*, when) different substrates 110 are made from the same aluminum (Al) material, the tensile strength value of each substrate 110 may vary depending on the manufacturing method. The variations in the tensile strength value of the substrate 110 based on the manufacturing method will be discussed later with reference to FIG. 8.

In one or more embodiments, the uncoated portion 150 on the substrate 110 may include a first surface 152 of the substrate 110 and a second surface 154 opposite to the first surface 152 of the substrate 110. The uncoated portion 150 refers to a region on the substrate 110 where the active material is not coated.

In one or more embodiments, a width W1 of the first surface 152 of the uncoated portion 150 and a width W2 of the second surface 154 of the uncoated portion 150 may be the same. Consequently, uncoated portions of equal size may be formed on both the top and bottom surfaces of the substrate 110.

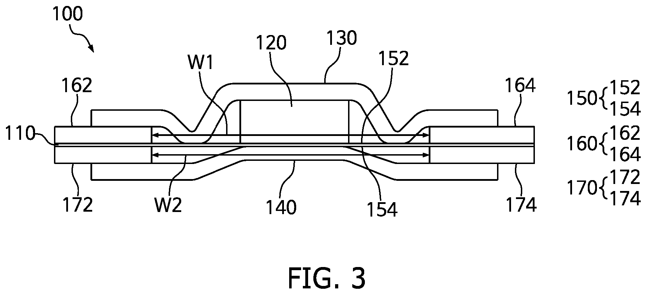

In one or more embodiments, the secondary battery electrode 100 may include a coated portion on which an active material layer is formed by applying an active material on the substrate 110. The active material layer may include a first active material layer 160 formed around (*e.g.*, on both sides of) the first surface 152 of the uncoated portion 150, and a second active material layer 170 formed around (*e.g.*, on both sides of) the second surface 154 of the uncoated portion 150. Further, the first active material layer 160 may include a first-1 active material layer 162 formed on one side (*e.g.*, the left side in FIGS. 2 and 3) of the first surface 152 of the uncoated portion 150 and a first-2 active material layer 164 formed on the opposite side (*e.g.*, the right side in FIGS. 2 and 3) of the first surface 152 of the uncoated portion 150. Similarly, the second active material layer 170 may include a second-1 active material layer 172 formed on one side (*e.g.*, the left side in FIGS. 2 and 3) of the second surface 154 of the uncoated portion 150 and a second-2 active material layer 174 formed on the opposite side (e.g., the right side in FIGS. 2 and 3) of the second surface 154 of the uncoated portion 150.

In one or more embodiments, the electrode tab 120 may be coupled to the substrate 110 on the first surface 152 of the uncoated portion 150. The method of coupling the electrode tab 120 to the substrate 110 may include, but is not limited to, welding.

In one or more embodiments, the first tape 130 may be adhered to the electrode tab 120 and a portion of the first active material layer 160. Additionally, the second tape 140 may be adhered to a portion of the second active material layer 170. In alternative embodiments, as will be discussed further with reference to FIG. 3, the first tape 130 may also be adhered to a portion of the first surface 152 of the uncoated portion 150, and the second tape 140 may also be adhered to a portion of the second surface 154 of the uncoated portion 150. In one or more embodiments, the tensile strength of at least one of the first tape 130 or the second tape 140 may be 230 N/mm² or greater, but the present disclosure is not limited thereto.

In one or more embodiments, the electrode tab 120 may be coupled to the first surface 152 of the uncoated portion 150. As shown in FIG. 1, only a portion of the electrode tab 120 may be coupled to the first surface 152 of the uncoated portion 150 such that the remaining portion of the electrode tab 120 is not coupled to the substrate 110 and protrudes outward from the substrate 110. As the electrode tab 120 has the portion protruding outward from the substrate 110, the electrode tab 120 may serve to conduct electricity to the outside.

In one or more embodiments, the first tape 130 may be adhered to the electrode tab 120 and a portion of the first active material layer 160. Additionally, as will be described in more detail later with reference to FIG. 3, the first tape 130 may also be adhered to a portion of the first surface 152 of the uncoated portion 150. As shown, for example, in FIG. 1, the first tape 130 may be adhered to cover both the electrode tab 120 and the first active material layer 160. With this adhesive configuration, as will be described in more detail later, even if the active material swells during the charging and discharging process and exerts pressure on the substrate 110, the tensile strength of the first tape 130 may be adjusted to prevent or reduce cracks from forming in the substrate 110.

In one or more embodiments, the first surface 152 of the uncoated portion 150 may be arranged between the first-1 active material layer 162 and the first-2 active material layer 164, but the present disclosure is not limited thereto. For example, the active material layer arranged around the first surface 152 of the uncoated portion 150 may include (*e.g.*, consist of) only one of the first-1 active material layer 162 or the first-2 active material layer 164, but the present disclosure is not limited thereto. In one or more embodiments, the first surface 152 of the uncoated portion 150 may be located at one edge of the substrate 110, but the present disclosure is not limited thereto.

In one or more embodiments, the tensile strength of at least one of the first tape 130 or the second tape 140 may be 230 N/mm² or greater and 375 N/mm² or less, but the present disclosure is not limited thereto.

In one or more embodiments, the tensile strength of the second tape 140 may be greater than or equal to the tensile strength of the first tape 130, but the present disclosure is not limited thereto. As will be discussed in more detail later, in a situation where the electrode assembly is wound to form a jelly roll-type (kind) assembly, there may be a high probability of crack formation due to the step differences at the tab attachment areas. In embodiments in which the first tape 130 and the second tape 140 are formed such that the tensile strength of the second tape 140 is greater than the tensile strength of the first tape 130, the formation of cracks due to these step differences can be more effectively prevented or reduced.

In one or more embodiments, the tensile strength of the second tape 140 may be 280 N/mm² or greater, but the present disclosure is not limited thereto.

In one or more embodiments, the tensile strength of the second tape 140 may be 280 N/mm² or greater and 375 N/mm² or less, but the present disclosure is not limited thereto.

In one or more embodiments, in a case where an internal expansion ratio of the secondary battery electrode 100 is 0.2 or less, the tensile strength of the first tape 130 and the tensile strength of the second tape 140 may each be 230 N/mm² or greater and 280 N/mm² or less, but the present disclosure is not limited thereto.

In one or more embodiments, in a case where the internal expansion ratio of the secondary battery electrode 100 is greater than 0.2 but not exceeding 0.3, the tensile strength of at least one of the first tape 130 or the second tape 140 may be 280 N/mm² or greater, but the present disclosure is not limited thereto.

In one or more embodiments, in a case where the internal expansion ratio of the secondary battery electrode 100 is greater than 0.2 but not exceeding 0.3, the tensile strength of at least one of the first tape 130 or the second tape 140 may be 280 N/mm² or greater and 375 N/mm² or less, but the present disclosure is not limited thereto.

In one or more embodiments, in a case where the internal expansion ratio of the secondary battery electrode 100 is greater than 0.3 but less than 0.45, the tensile strength of the first tape 130 and the tensile strength of the second tape 140 may each be 280 N/mm² or greater, but the present disclosure is not limited thereto.

In one or more embodiments, in a case where the internal expansion ratio of the secondary battery electrode 100 is greater than 0.3 but less than 0.45, the tensile strength of the first tape 130 and the tensile strength of the second tape 140 may each be 280 N/mm² or greater and 375 N/mm² or less, but the present disclosure is not limited thereto.

In one or more embodiments, in a case where the internal expansion ratio of the secondary battery electrode 100 is 0.45 or greater, the tensile strength of the first tape 130 and the tensile strength of the second tape 140 may each be 375 N/mm², but the present disclosure is not limited thereto.

In one or more embodiments, the ratio of the tensile strength of the first tape 130 to the tensile strength of the second tape 140 may range from 1:1 to 1:1.5, but the present disclosure is not limited thereto.

By attaching the first tape 130 and the second tape 140 with different tensile strength values depending on the internal expansion ratio of the secondary battery electrode 100, cracks that may occur around the electrode tab 120 can be effectively prevented or reduced. While modifying the composition of the substrate 110 to enhance the strength of the substrate 110 may affect other characteristics of the secondary battery electrode 100, adjusting the tensile strength of the first tape 130 and the tensile strength of the second tape 140 allows for easy compensation for the physical properties of the substrate. Moreover, by adjusting the tensile strength of the first tape 130 and the tensile strength of the second tape 140, cracks in the secondary battery electrode 100 can be more effectively prevented or reduced compared to simply attaching the tapes without considering their tensile strength values.

FIG. 3 illustrates a cross-sectional view taken along the line A-A' of FIG. 1, according to one or more embodiments of the present disclosure. In comparison with the configuration of FIG. 2, FIG. 3 shows a configuration where the first tape 130 not only adheres to the electrode tab 120 and a portion of the first active material layer 160 around (*e.g*., surrounding) the uncoated portion 150 but also adheres to a portion of the uncoated portion 150. Accordingly, the description of the components in FIG. 3 that are substantially the same as those in FIG. 2 may not be repeated.

In one or more embodiments, the first tape 130 may be adhered to a portion of the first surface 152 of the uncoated portion 150, and the second tape 140 may be adhered to a portion of the second surface 154 of the uncoated portion 150. The adhesion of the first tape 130 to the portion of the first surface 152 of the uncoated portion 150 may be determined by a distance between the electrode tab 120 and the first-1 active material layer 162, or a distance between the electrode tab 120 and the first-2 active material layer 164. In other words, the greater the distance therebetween (*e.g.*, between the first-1 active material layer 162 and the first-2 active material layer 164), the higher the possibility that the first tape 130 will be adhered to the portion of the first surface 152 of the uncoated portion 150.

The adhesion of the second tape 140 to the portion of the second surface 154 of the uncoated portion 150 may be determined based on a distance between the second-1 active material layer 172 and the second-2 active material layer 174. For example, the greater the distance therebetween, the higher the possibility that the second tape 140 will be adhered to the portion of the second surface 154 of the uncoated portion 150.

The first tape 130 and the second tape 140 may have flexible property, but the present disclosure is not limited thereto. Due to the flexible property of the first tape 130 and the second tape 140, each of the first tape 130 and the second tape 140 may be adhered to the portion of the uncoated portion 150. In other words, the height of the first surface 152 of the uncoated portion 150 may be lower than upper surfaces of the first-1 active material layer 162, the first-2 active material layer 164, and the electrode tab 120, and thus, if the first tape is flexible, it may allow the tape to adhere to the varying heights of these surfaces. In addition, the height of the second surface 154 of the uncoated portion 150 may be higher than lower surfaces of the second-1 active material layer 172 and the second-2 active material layer 174, and thus, if the first tape is flexible, it may allow the tape to adhere to the varying heights of these surfaces.

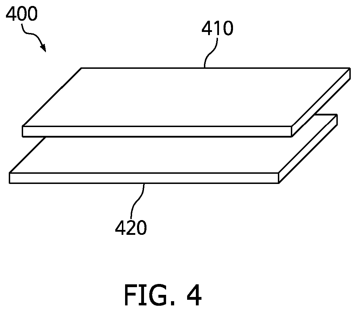

FIG. 4 illustrates an exploded perspective view of a tape according to one or more embodiments of the present disclosure. As shown in FIG. 4, a tape 400 may include a base film 410 and an adhesive layer 420.

In one or more embodiments, the tape 400 may correspond to either the first tape 130 or the second tape 140.

The base film 410 of the tape 400 may serve to provide structural support for the tape 400. The adhesive layer 420 of the tape 400 may serve to provide viscosity that allows the tape 400 to adhere to other materials.

As the type (kind) of base film 410 of the tape 400 changes, the physical properties of the tape 400 may vary depending thereon. Further, even if (*e.g.*, when) the same material for the base film 410 is employed, the physical properties of the tape 400 may also vary based on the processing methods of the material used.

For the adhesive layer 420 of the tape 400, a material used for the adhesive layer 420 and/or a thickness of the adhesive layer 420 may cause differences in the adhesive strength between the tape 400 and the material to which the tape 400 is adhered.

Further, the tensile strength of the tape 400 may be determined depending on the type (kind) of base film 410 of the tape 400. Thus, by varying the material of the base film 410 and/or varying the method of processing the base film 410, tapes 400 with different tensile strength values can be produced.

Therefore, in one or more embodiments of the present disclosure, the tensile strength of the first tape 130 may be determined by at least one of the tensile strength or the physical properties of the base film 410 of the first tape 130, and the tensile strength of the second tape 140 may be determined by at least one of the tensile strength or the physical properties of the base film 410 of the second tape 140. Additionally, or alternatively, the tensile strength of the first tape 130 and the tensile strength of the second tape 140 may also be determined by the physical properties of the adhesive layer 420 of the first tape 130 and the physical properties of the adhesive layer 420 of the second tape 140, respectively.

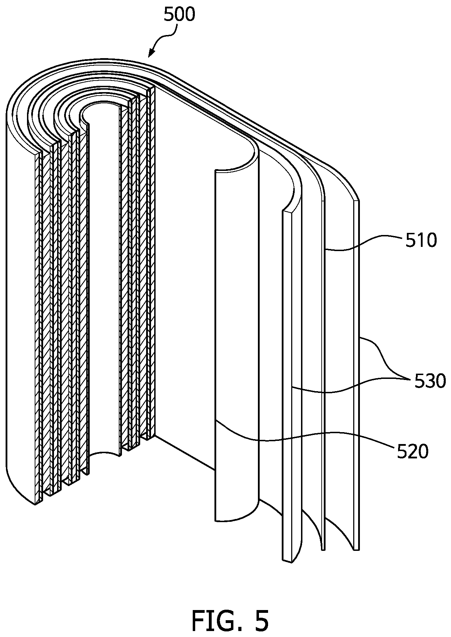

FIG. 5 illustrates an exploded perspective sectional view of an electrode assembly 500 according to one or more embodiments of the present disclosure. As shown in FIG. 5, the electrode assembly 500 may include a positive electrode plate 510, a negative electrode plate 520, and a separator 530.

In one or more embodiments, the electrode assembly 500 may be formed as a winding structure (*e.g.*, formed as a wound structure) in a jelly roll configuration where the separator 530, which is an insulator, is interposed between the positive electrode plate 510 and the negative electrode plate 520 and then wound together. However, this is merely an example, and the electrode assembly 500 may also be formed as a stacked structure where the separator 530, which is an insulator, is interposed between the positive electrode plate 510 and the negative electrode plate 520 in a layered arrangement.

In one or more embodiments, the negative electrode plate 520 may include a substrate, a coated portion formed with an active material layer by applying the active material thereon, and an uncoated portion where the active material is not applied. Further, the negative electrode plate 520 may have a negative electrode tab coupled to the uncoated portion. In embodiments in which the electrode assembly 500 is formed as the winding structure in the jelly roll configuration, the winding structure may be formed with the negative electrode plate 520 having a surface of the uncoated portion that includes the negative electrode tab as an inner surface, and a surface opposite to the surface that includes the negative electrode tab as an outer surface.

Additionally, or alternatively, the positive electrode plate 510 may include a substrate, a coated portion formed with an active material layer by applying the active material thereon, and an uncoated portion where the active material is not applied. Further, the positive electrode plate 510 may have a positive electrode tab coupled to the uncoated portion. In embodiments in which the electrode assembly 500 is formed as the winding structure (e.g., formed as a wound structure) in a jelly roll configuration, the winding structure may be formed with the positive electrode plate 510 having a surface of the uncoated portion that includes the positive electrode tab as an inner surface, and a surface opposite to the surface that includes the positive electrode tab as an outer surface.

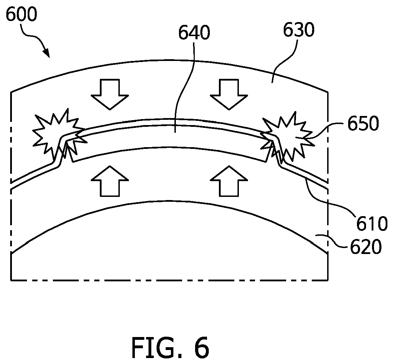

In one or more embodiments, in a case where the electrode assembly 500 is formed into a winding structure (*e.g.*, formed as a wound structure) in a jelly roll configuration, the outer surface may be defined as the surface of the negative electrode plate that is not coupled to the negative electrode tab and/or as the surface of the positive electrode plate that is not coupled to the positive electrode tab. When the electrode assembly 500 is wound, the outer surface may have a step difference due to a space occupied by the electrode tabs on the substrate. Thus, stress may be concentrated at this step difference, which may cause cracks in the substrate. Further details will be described in more detail later with reference to FIG. 6.

In one or more embodiments, in a case where the electrode assembly is formed into a winding structure (*e.g.*, formed as a wound structure) in a jelly roll configuration, the winding structure may be formed with the positive electrode plate 510 and/or the negative electrode plate 520 respectively having surfaces of uncoated portions that include the positive electrode tab and/or the negative electrode tab as the outer surfaces, and surfaces opposite to the surfaces with the positive electrode tab and/or the negative electrode tab as the inner surfaces.

FIG. 6 illustrates a cross-sectional diagram of a portion of an electrode assembly, designed to explain the cause of crack formation. The configurations shown in FIG. 6 are specifically designed to illustrate the reasons behind crack formation and may be different from the actual configurations of embodiments of the present disclosure.

FIG. 6 illustrates a cross-sectional view of an electrode assembly 600 in which a positive electrode plate, a separator, a negative electrode plate, and a separator are sequentially wound together. As shown in FIG. 6, the secondary battery electrode 100, in which a substrate 610 is coupled to an electrode tab 640, is positioned at the center, and the separators 620 and 630 are respectively positioned on a top surface and a bottom surface of the secondary battery electrode. Here, the secondary battery electrode 100 may be either a positive electrode or a negative electrode. In the configuration shown in FIG. 6, the secondary battery electrode 100 is wound between the separators 620 and 630, and the electrode assembly 600 is wound such that the electrode tab 640 is attached to a surface, which is an inner surface, of the substrate 610.

The secondary battery electrode 100 may swell during the charging and discharging process, and the substrate 610 and the electrode tab 640 may be affected by pressure due to the pressing force exerted by the separators 620 and 630 respectively positioned on the top and bottom surface of the secondary battery electrode, as well as the pushing force against each other between the substrate 610 and the electrode tab 640. This may lead to the concentration of stress in these regions. As the electrode assembly 600 is manufactured by being wound, a step difference may occur at a coupling portion between the substrate 610 and the electrode tab 640 during the winding process. If such a pressure is continuously applied to the step difference in the substrate 610, the substrate 610 may eventually become damaged or develop cracks. Cracks occurring around the electrode tab 640 may cause serious issues, such as a reduction in the battery cell's reliability (*e.g.*, capacity, lifespan, and/or the like) and/or a decrease in the battery cell's safety (*e.g.*, risk of short circuits, ignition, and/or the like).

Because the electrode assembly 600 is wound such that the electrode tab 640 is attached to the surface that is the inner surface, attaching a tape with high tensile strength to the outer surface may more effectively complement the physical properties of the substrate 610, compared to the case of attaching the tape with a high tensile strength to the inner surface. However, the present disclosure is not limited thereto. In one or more embodiments, attaching a tape with a high tensile strength to the inner surface, rather than to the outer surface, may more effectively complement the physical properties of the substrate 610. However, the present disclosure is not limited thereto.

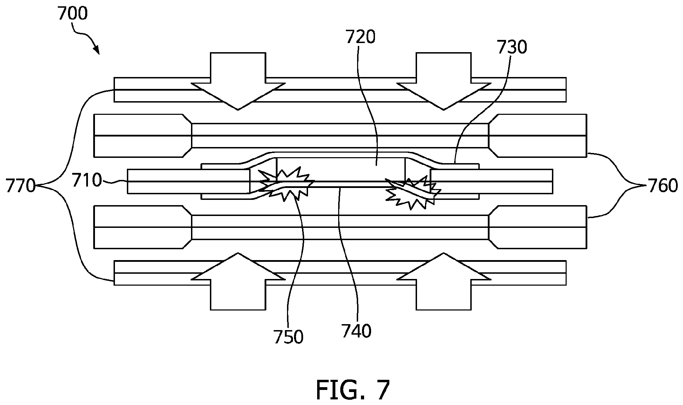

FIG. 7 illustrates a cross-sectional diagram of a portion of an electrode assembly, designed to explain the cause of crack formation. The configurations shown in FIG. 7 are specifically designed to illustrate the reasons behind crack formation and may be different from the actual configurations of embodiments of the present disclosure.

FIG. 7 illustrates a cross-sectional view of an electrode assembly 700 in which a positive electrode plate 770 and a negative electrode plate 710 are sequentially stacked with a separator 760 interposed between the positive electrode plate 770 and the negative electrode plate 710. As shown in FIG. 7, the negative electrode plate 710 is positioned at the center, followed by the separator 760 and the positive electrode plate 770 stacked in sequence. Here, the positions of the positive electrode plate 770 and the negative electrode plate 710 may be interchanged. For example, the positive electrode plate 770 may be positioned at the center, followed by the separator 760 and the negative electrode plate 710 stacked in sequence.

If the positive electrode plate 770 and the negative electrode plate 710 swell during the charging and discharging process, each of the positive electrode plate 770 and the negative electrode plate 710 is affected by pressure due to the pressing force exerted by the separators 760 located on the top and bottom surfaces thereof, as well as the force exerted by the expanding positive electrode plate 770 and negative electrode plate 710 pushing outward.

Furthermore, during the formation process of the secondary battery, the secondary battery may expand as the secondary battery undergoes repeated charging and discharging. During this expansion, the pressure applied to the substrate may increase significantly. If the pressure is continuously applied to the substrate, the substrate may eventually become damaged or develop cracks. Cracks occurring around the electrode tab may severely impact the reliability of the battery cell (*e.g.*, capacity, lifespan, and/or the like) and may lead to serious issues such as short circuits, electrical faults, and/or ignition risk.

FIG. 8 is a bar graph showing test results for the tensile strength of a substrate manufactured using different manufacturing methods, according to one or more embodiments of the present disclosure. Referring to FIG. 8, the tensile strength values of the substrate corresponding to one or more suitable manufacturing methods can be observed.

As shown in FIG. 8, it can be observed that even substrates made of the same material may have different tensile strength values. The substrate 110 may use any material that forms the framework of the secondary battery electrode 100. For example, the substrate 110 may include A1100 material, but the present disclosure is not limited thereto. Here, A1100 refers to a high-strength aluminum (Al) material generally available and/or generally used in the manufacture of secondary batteries.

By varying the material or the manufacturing method of the substrate, it is possible to prevent or reduce cracks from occurring in the substrate. However, the manufacturing method that increases the tensile strength has the disadvantage of being expensive, resulting in higher costs. Additionally, it may be difficult to change the physical properties of the substrate because changing the physical properties of the substrate can significantly impact other properties, such as electrical conductivity and elongation.

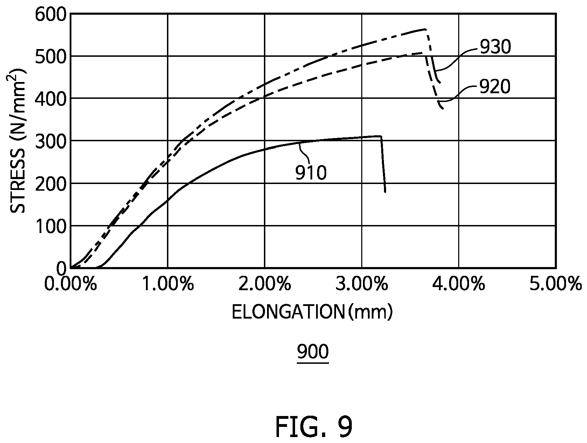

FIG. 9 is a graph showing result of tensile test conducted before and after attaching a tape, according to one or more embodiments of the present disclosure.

The graph in FIG. 9 represents a graph of a stress-elongation curve, and the graph shows a tensile test result 910 of the substrate alone, a tensile test result 920 of the substrate when a tape A is adhered to opposite surfaces of the substrate, and a tensile test result 930 of the substrate when a tape B is adhered to the opposite surfaces of the substrate. Here, the tape A and the tape B may have different physical properties. For example, the tensile strength of the tape A may be 230 N/mm² and the tensile strength of the tape B may be 280 N/mm².

In FIG. 9, a horizontal axis represents the elongation and a vertical axis represent the stress. As the elongation increases, the stress applied to an object also increases. The stress at a point where the stress no longer increases and begins to decrease indicates the tensile strength value.

Referring to FIG. 9, it can be observed that there is a significant difference in tensile strength if the tape is attached to the substrate compared to if the tap is not attached to the substrate. For example, the tensile strength value of the substrate alone may be approximately 300 N/mm², whereas the tensile strength value increases to about 500 N/mm² if (*e.g.*, when) the tape A is attached to the opposite surfaces of the substrate, and to about 550 N/mm² if (*e.g.*, when) the tape B is attached to the opposite surfaces of the substrate. According to the tensile test results, simply attaching the tape to the substrate results in a tensile strength increase of approximately 65-70%, and attaching the tape B instead of the tape A leads to an additional tensile strength increase of approximately 10%.

The tensile test results shown in FIG. 9 confirm that the physical properties of the substrate can be enhanced by applying the tape to the substrate. Additionally, it can be seen that the physical properties of the substrate are further improved if (*e.g.*, when) tapes with different tensile strength values are used.

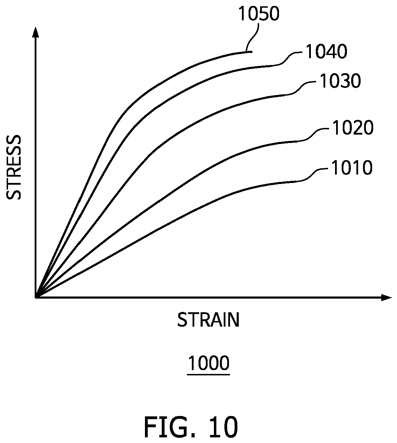

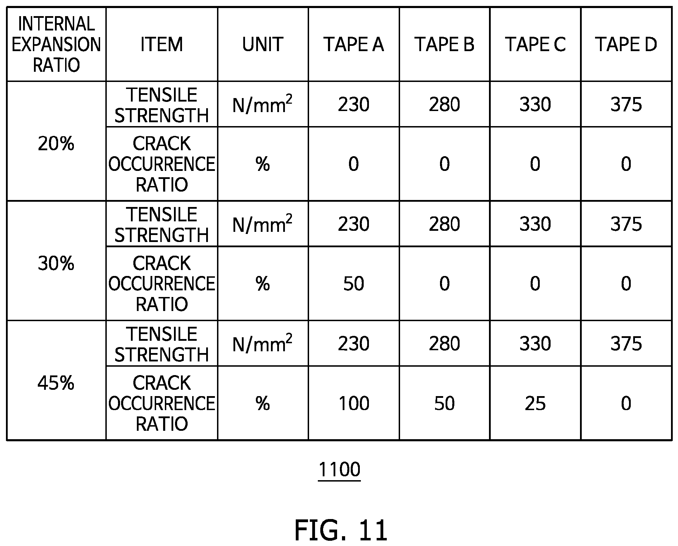

FIG. 10 is a graph showing tensile strength values based on different types (kinds) of tapes and their attachment locations according to one or more embodiments of the present disclosure. FIG. 11 is a table showing tensile strength values corresponding to variations in internal expansion ratios for different types (kinds) of tapes.

FIG. 10 illustrates a graph showing the tensile strength values based on different types (kinds) of tapes and their attachment locations. The graph in FIG. 10 shows the following curves: a curve 1010 indicating a stress-strain relationship when only the tensile strength of the substrate itself is measured, a curve 1020 indicating a stress-strain relationship when the tensile strength of the substrate is measured after a tape A is attached to each of the opposite surfaces of the substrate, a curve 1030 indicating a stress-strain relationship when the tensile strength of the substrate is measured after the tape A is attached to one of the opposite surfaces of the substrate and a tape B is attached to the other one of the opposite surfaces of the substrate, a curve 1040 indicating a stress-strain relationship when the tensile strength of the substrate is measured after the tape B is attached to each of the opposite surfaces of the substrate, and a curve 1050 indicating a stress-strain relationship when the tensile strength of the substrate is measured after a tape D is attached to each of the opposite surfaces of the substrate. The tensile strength with the tape A is the lowest, and the tensile strength with the tape D is the highest. In other words, the tensile strength with the tape B is an intermediate tensile strength between the tensile strength with the tape A and the tensile strength with the tape D.

As shown in FIG. 10, it can be observed that the tensile strength of the substrate increases as a tape with a higher tensile strength is attached to the substrate, compared to the tensile strength of the substrate alone. Further, it can be observed that even if (*e.g.*, when) a tape with a higher tensile strength is attached to only one of the opposite surfaces of the substrate, the tensile strength of the substrate increases. In other words, by attaching tapes with higher tensile strength values to the opposite surfaces of the substrate, the tensile strength of the substrate can be enhanced. Moreover, even if (*e.g.*, when) a tape with a higher tensile strength value is attached to only one surface of the substrate, the tensile strength of the substrate can be improved. By adjusting the physical properties of the tape, the substrate to which the tape is attached can be made to have the physical properties that are more resistant to cracking, thereby preventing or reducing the occurrence of cracks.

FIG. 11 is a table showing a crack occurrence ratio (%) based on an internal expansion ratio (%) and a tensile strength of a tape attached to an electrode plate (*i.e.,* a tape attached to both sides of the electrode plate). According to FIG. 11, as the internal expansion ratio of the secondary battery electrode increases, it can be observed that the crack occurrence ratio decreases when a tape with a higher tensile strength is attached. Therefore, a tape with an appropriate or suitable tensile strength may be selected based on the changes in the internal expansion ratio of the secondary battery electrode. Because a tape with a higher tensile strength value is generally more expensive and more difficult to manufacture compared to a tape with a lower tensile strength value, the tape with the lower tensile strength value may be used for a secondary battery electrode with a lower internal expansion ratio. Conversely, for a secondary battery electrode with a higher internal expansion ratio, the crack occurrence ratio may be reduced by attaching the tape with the higher tensile strength value.

Referring to FIG. 11, it can be observed that the crack occurrence ratio is 0% in a case where the internal expansion ratio is 20%, regardless of whether the tape A, B, C, or D is attached. For example, in a case where the internal expansion ratio is 20%, attaching any one of the tapes A to D may reduce the crack occurrence ratio to 0%. Therefore, in a case where the internal expansion ratio is 20% or less, the crack occurrence ratio may remain at 0% regardless of which tape among the tapes A to D is attached.

In a case where the internal expansion ratio is 30%, it can be observed that the crack occurrence ratio is 50% when the tape A having a tensile strength of 230 N/mm² is attached, whereas the crack occurrence ratio is 0% when one of the tapes B to D, each of which has a tensile strength of 280 N/mm² or greater, is attached. These results may also be applied to cases where the internal expansion ratio is greater than 20% but less than 30%.

In a case where the internal expansion ratio is 45%, it can be observed that the crack occurrence ratio is 0% only when the tape D having a tensile strength of 375 N/mm² is attached. These results may also be applied to cases where the internal expansion ratio is greater than 30% but less than 45%.

According to the results, by attaching a tape with an appropriate or suitable tensile strength based on the changes in the internal expansion ratio of the secondary battery electrode, cracks occurring at the tab attachment areas of the substrate can be prevented or reduced, ensuring a crack occurrence ratio of 0% or a significantly reduced crack occurrence ratio.

By selectively attaching tapes made from different materials or different manufacturing methods based on the change of the expansion ratio, the formation of cracks in the electrode plate can be prevented or reduced. This approach allows for the attachment of a tape with the most appropriate or suitable tensile strength value, enabling the production of secondary batteries at a lower cost.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Although the present disclosure has been described in connection with some example embodiments herein, one or more suitable modifications and changes can be made without departing from the scope of the present disclosure, which can be understood by those skilled in the art to which the present disclosure pertains. In addition, such modifications and changes should be considered within the scope of the claims appended herein.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The portable device, vehicle, the secondary battery, *e.g.*, a battery controller, and/or the secondary battery electrode, electrode assembly, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### REFERENCE NUMERALS

100 : secondary battery electrode
110 : substrate
120 : electrode tab
130 : first tape
140 : second tape
150 : uncoated portion
152 : first surface on uncoated portion
154 : second surface on uncoated portion
160 : first active material layer
162 : first-1 active material layer
164 : first-2 active material layer
170 : second active material layer
172 : second-1 active material layer
174 : second-2 active material layer
W1 : width of first surface of uncoated portion
W2 : width of second surface of uncoated portion

## Claims

1. A secondary battery electrode (100) comprising:
a substrate (110, 610) comprising
an uncoated portion (150) comprising a first surface (152) and a second surface (154), the second surface (154) being opposite the first surface (152), and
a coated portion on which a first active material layer (160) and a second active material layer (170) are coated, the second active material layer (170) being on a surface of the substrate (110, 610) opposite the first active material layer (160);
an electrode tab (120, 640) coupled to the substrate (110, 610);
a first tape (130) adhered to a portion of the first active material layer (160) around the electrode tab (120, 640) and the uncoated portion (150); and
a second tape (140) opposite to the first tape (130) and adhered to a portion of the second active material layer (170) around the uncoated portion (150),
wherein a tensile strength of at least one of the first tape (130) or the second tape (140) is 230 N/mm² or greater.

2. The secondary battery electrode (100) as claimed in claim 1, wherein the tensile strength of at least one of the first tape (130) or the second tape (140) is 230 N/mm² or greater and 375 N/mm² or less.

3. The secondary battery electrode (100) as claimed in claim 1 or 2, wherein the tensile strength of the second tape (140) is equal to or greater than the tensile strength of the first tape (130).

4. The secondary battery electrode (100) as claimed in claim 3, wherein a ratio of the tensile strength of the first tape (130) to the tensile strength of the second tape (140) is in a range of 1:1 to 1:1.5.

5. The secondary battery electrode (100) as claimed in claims 1 to 4, wherein the tensile strength of the second tape (140) is 280 N/mm².

6. The secondary battery electrode (100) as claimed in claims 1 to 5, wherein, in a case where an internal expansion ratio of the secondary battery electrode (100) is 0.2 or less, each of the tensile strength of the first tape (130) and the tensile strength of the second tape (140) is 230 N/mm² or greater and 280 N/mm² or less, and
the internal expansion ratio indicates a ratio of difference between a thickness of the secondary battery electrode (100) after a formation process and a thickness of the secondary battery electrode (100) before the formation process relative to the thickness of the secondary battery electrode (100) before the formation process.

7. The secondary battery electrode (100) as claimed in claim 6, wherein, in a case where the internal expansion ratio of the secondary battery electrode (100) is greater than 0.2 but not exceeding 0.3, the tensile strength of at least one of the first tape (130) or the second tape (140) is 280 N/mm² or greater.

8. The secondary battery electrode (100) as claimed in claim 6, wherein, in a case where the internal expansion ratio of the secondary battery electrode (100) is greater than 0.3 but less than 0.45, the tensile strength of the first tape (130) and the tensile strength of the second tape (140) are each 280 N/mm² or greater.

9. The secondary battery electrode (100) as claimed in claim 6, wherein, in a case where the internal expansion ratio of the secondary battery electrode (100) is 0.45 or greater, the tensile strength of the first tape (130) and the tensile strength of the second tape (140) are each 375 N/mm².

10. The secondary battery electrode (100) as claimed in claims 1 to 9, wherein the electrode tab (120, 640) is on the first surface (152) of the uncoated portion (150).

11. The secondary battery electrode (100) as claimed in claims 1 to 10, wherein the first surface (152) and the second surface (154) of the uncoated portion (150) have the same width.

12. The secondary battery electrode (100) as claimed in claims 1 to 11, wherein
the first active material layer (160) comprises a first-1 active material layer (162) and a first-2 active material layer (164),
the second active material layer (170) comprises a second-1 active material layer (172) and a second-2 active material layer (174),
the first surface (152) of the uncoated portion (150) is between the first-1 active material layer (162) and the first-2 active material layer (164), and
the second surface (154) of the uncoated portion (150) is between the second-1 active material layer (172) and the second-2 active material layer (174).

13. The secondary battery electrode (100) as claimed in claims 1 to 12, wherein the first tape (130) is adhered to a portion of the first surface (152) of the uncoated portion (150), and
the second tape (140) is adhered to a portion of the second surface (154) of the uncoated portion (150).

14. The secondary battery electrode (100) as claimed in claims 1 to 13, wherein each of the first tape (130) and the second tape (140) comprises a base film (410) and an adhesive layer (420) and/or.
wherein: the tensile strength of the first tape (130) is determined by at least one of a tensile strength or a physical property of the base film (410) of the first tape (130); and the tensile strength of the second tape (140) is determined by at least one of a tensile strength or a physical property of the base film (410) of the second tape (140).

15. The secondary battery electrode (100) as claimed in claims 1 to 14, wherein the first tape (130) and the second tape (140) have a flexible property, thus enabling an adhesion to a portion of the uncoated portion (150).
